# EUROPEAN PATENT SPECIFICATION

(11) **EP 3 215 276 B1**
(45) Date of publication and mention of the grant of the patent: **05.01.2022**
(21) Application number: 15857789.0
(22) Date of filing: 04.11.2015
(51) Int. Cl.: B05B 3/04, F03B 13/00, H02P 9/04, A01G 25/16, B05B 3/06, F03B 3/08

(54) **EMBEDDED SPRINKLER ACTIVATED GENERATOR**
EINGEBETTETER SPRINKLERAKTIVIERTER GENERATOR
GÉNÉRATEUR ACTIVÉ PAR PULVÉRISATEUR INCORPORÉ

(30) Priority: 05.11.2014 IN 3490MU2014
(43) Date of publication of application: 13.09.2017
(73) Proprietor: Jain Irrigation Systems Limited, Jalgaon, Maharashtra 425001 (IN)
(72) Inventor: DEFRANK MICHAEL PATRICK, Pawhuska, Oklahoma 74056 (US); JAIN AJIT BHAVARLAL, Jalgaon - 425001 (IN)
(74) Representative: EP&C
(86) International application number: PCT/IN2015/000407
(87) International publication number: WO 2016/071924

(56) References cited:
- WO-A1-2014/067062
- WO-A2-2014/068594
- WO-A2-2014/068594
- CN-U- 201 631 957
- CN-U- 202 263 658
- DE-U1-202010 004 787
- US-A- 4 073 438
- US-A1- 2004 232 701
- US-A1- 2006 102 739
- US-A1- 2010 270 803
- US-A1- 2012 228 399
- US-B1- 7 362 000
- US-B2- 6 864 591
- US-B2- 7 723 860
- US-B2- 8 339 006

## Description

### TECHNICAL FIELD

The present subject matter described herein, in general, relates to a sprinkler, and more particularly to a sprinkler configured to conserve energy.

### BACKGROUND

Presently sprinklers embedded with generator are being used to harvest energy from flowing water. They convert the kinetic energy of the flowing water to electric energy thus conversing energy. CN201631957U discloses a sprinkler head provided with a generator according to the prior art.

However, the current design of sprinklers configured to harvest energy has limitation on torque obtained and length of the rotor arm. Therefore, to generate more energy more torque is required, and since the torque obtained is proportional to the length of the rotor arm, one needs to longer rotor arm. Thus increasing the overall size of the system.

Hence, it may be desirable to obtain larger torque in a system without increasing the size of the entire system or sprinkler housing.

### SUMMARY

This summary is provided to introduce aspects related to an embedded sprinkler system and the aspects are further described below in the detailed description. This summary is not intended to identify essential features of the claimed subject matter nor is it intended for use in determining or limiting the scope of the claimed subject matter.

In one implementation an embedded sprinkler system is disclosed. The system may comprise a sprinkler arm. Further a generator rotor may be directly mounted and integrated on the sprinkler arm. Further the system may comprise a generator stator enclosed around the generator rotor. Further a printed circuit board housing enclosing the generator stator.

In another implementation an embedded sprinkler system is disclosed. The system comprising a generator rotor mounted on a sprinkler arm characterized wherein the generator rotor is integrated with the sprinkler arm without a housing for the generator rotor. Further may comprise of a generator stator enclosed around the generator rotor. Further the system may comprise of a printed circuit board housing enclosing the generator stator.

In another implementation a method to assemble an embedded sprinklers system. The method comprising mounting a generator rotor directly on a sprinkler arm. Further the method comprises enclosing the generator rotor with a generator stator. The method may further comprise enabling a fluid flow from a nozzle to atmosphere via the sprinkler arm.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a prior art.
Figure 2a illustrates front view of an embedded sprinkler system, in accordance with an embodiment of the present subject matter.
Figure 2b illustrates section view of an embedded sprinkler system, in accordance with an embodiment of the present subject matter.
Figure 3 illustrates a flow chart for assembling an embedded sprinkler system, in accordance with an embodiment of the present subject matter.

### DETAILED DESCRIPTION

The present subject matter discloses an embedded sprinkler system configured to harvest energy.

The present subject matter discloses an embedded sprinkler system. The embedded sprinkler system of the present disclosure may be configured to convert hydraulic energy to electrical energy. The embedded sprinkler system disclosed may be configured to obtain higher torque without increasing the size of the entire system. The present disclosure will further enable wider selection of generator designs for a sprinkler system to generate/harvest maximum energy.

The embedded sprinkler system of the present disclosure embeds a stator and rotor directly into a sprinkler system. The rotor may be integrated with a sprinkler arm. The sprinkler arm can be further coupled to a nozzle. The sprinkler arm may be angled. Further, the stator may be enclosed around the rotor. Thus allowing for a torque arm to be as long as desired enabling broader motor design to overcome initial torque required.

Further the embedded sprinkler system may comprise of a thin film board connected to a power source.

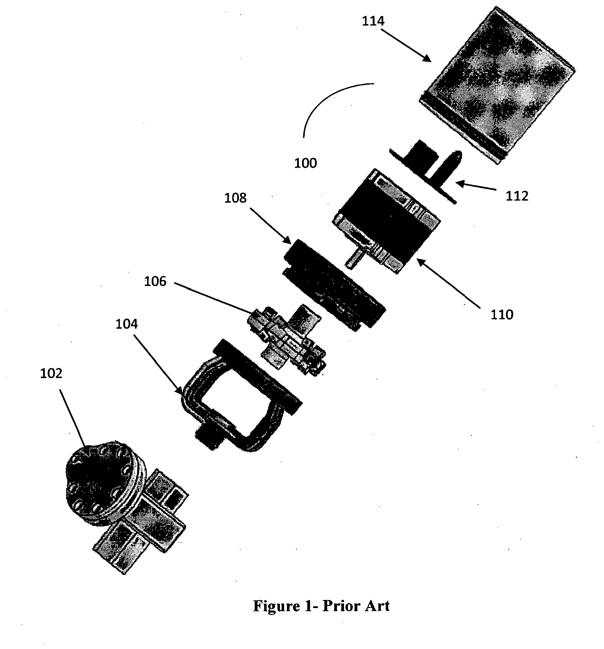

Referring to Figure 1, a perspective view of a sprinkler 100, which does not fall within the scope of the claims is shown . The sprinkler 100 may comprise a gate valve 102. Further, the sprinkler 100 may comprise a sprinkler frame 104, mounted on the gate valve 102. The sprinkler frame 104 may comprise a plurality of connecting wires. A rotor 106 may be mounted on the sprinkler frame 104. The rotor 106, may be configured to be mechanically coupled to a generator 110, wherein a generator base 108 may be sandwiched between the rotor 106 and the generator 110.

The sprinkler 100 may further comprise of an electronic component 112. The electronic component may further comprise of an embedded sensor, a memory module with pre-defined set of instructions and a means for communication.

According to an example the sprinkler 100 can be housed in a housing 114.

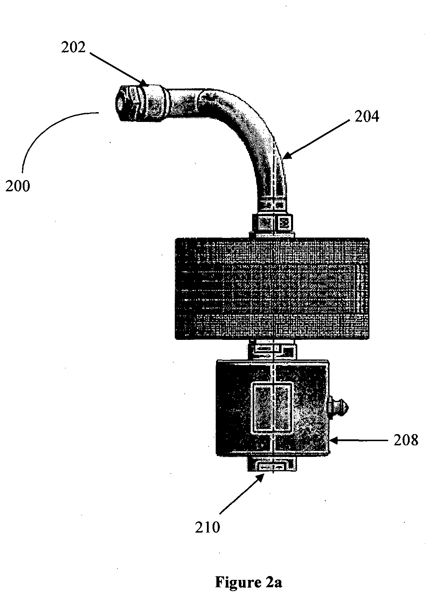

Figure 2a illustrates front view of an embedded sprinkler system 200, in accordance with an embodiment of the present subject matter. The embedded sprinkler system 200, may comprise nozzle 202. The nozzle 202 may be further connected a sprinkler arm 204. Further the embedded sprinkler system 200, may comprise of a rotary unit 208. The rotary unit 208 may be mounted on a gate valve 210.

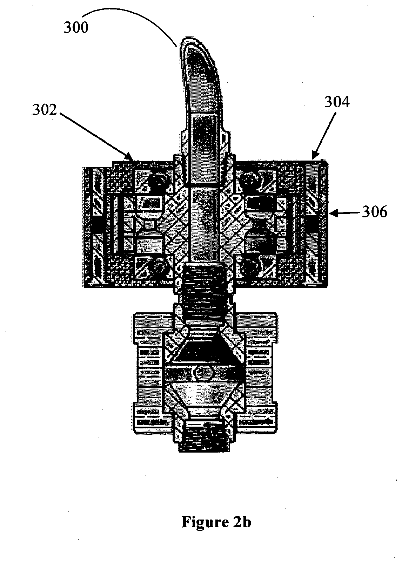

Figure 2b illustrates section view of an embedded sprinkler system 300, in accordance with an embodiment of the present subject matter. The embedded sprinkler system 300, may comprise a generator rotor 302 enclosed in a generator stator 304. Further, the embedded sprinkler system 300, may comprise a printed circuit board (PCB) housing 306 enclosing the generator stator 304.

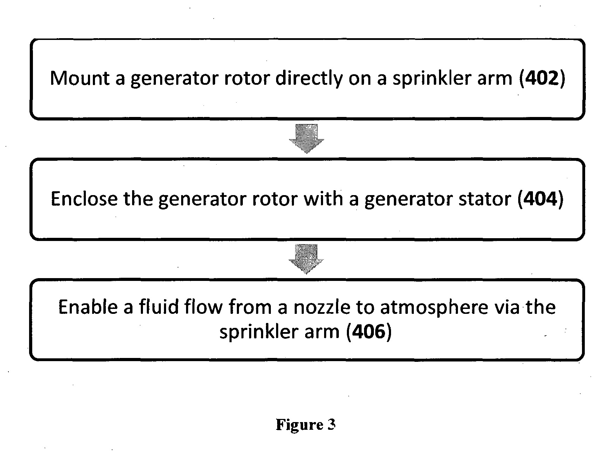

Now referring to Figure 3, illustrates a flow chart for assembling an embedded sprinkler system. At step 402 a generator rotor is mounted on a sprinkler arm. The generator rotor may be detachably integrated on the sprinkler arm. The generator rotor may be screwed on the sprinkler arm. The mounting of the generator rotor directly on the sprinkler arm enables removal of a housing usually present for conventional generators. The generator rotor is configured to capture the rotating movement of the sprinkler arm and convert the motion into energy for power generation.

Further at step 404, the generator rotor may be enclosed by generator stator. Further at step 406, a fluid flow may be enabled from a nozzle via the sprinkler arm.

## Claims

1. An embedded sprinkler system (300), comprising :
a sprinkler arm;
a generator rotor (302) directly mounted and integrated on the sprinkler arm;
a generator stator (302) enclosed around the generator rotor; and
a printed circuit board housing (306) enclosing the generator stator **characterized in that** the generator rotor is configured to capture a rotating movement of the sprinkler arm and convert the motion into energy for power generation.

2. The embedded sprinkler system of claim 1, wherein the generator rotor (302) is detachably mounted on the sprinkler arm.

3. The embedded sprinkler system as claimed in claim 1, further comprising a nozzle mounted on the sprinkler arm at a first end.

4. The embedded sprinkler system as claimed in claim 3, further comprising a rotary unit mounted on the sprinkler arm at a second end opposite to the first end.

5. The embedded sprinkler system as claimed in claim 1, further comprising a gate valve mounted below a rotary unit.

6. A method to assemble the embedded sprinkler system (300) as claimed in claim 1, the method comprising:
mounting the generator rotor (302) directly on the sprinkler arm;
enclosing the generator rotor with the generator stator (304); and
enabling a fluid flow from a nozzle to atmosphere via the sprinkler arm.

7. The method of claim 6, further comprising capturing the rotating movement of the sprinkler arm during the fluid flow via the generator rotor (302).

8. The method of claim 7, further comprising generation of power from the captured rotating movement.

9. The method of claim 6, further comprising wirelessly controlling and monitoring the generator rotor (302).

## Patentansprüche

1. Eingebettetes Sprinklersystem (300), umfassend
einen Sprinklerarm;
einen Generatorrotor (302), der direkt an dem Sprinklerarm angebracht und integriert ist;
einen Generatorstator (302), der den Generatorrotor umschließt; und
ein Leiterplattengehäuse (306), das den Generatorstator einschliesst,
**dadurch gekennzeichnet, dass** der Generatorrotor ausgestaltet ist, um eine Drehbewegung des Sprinklerarms zu erfassen und die Bewegung in Energie zur Stromerzeugung umzuwandeln.

2. Eingebettetes Sprinklersystem nach Anspruch 1, wobei der Generatorrotor (302) lösbar an dem Sprinklerarm angebracht ist.

3. Eingebettetes Sprinklersystem nach Anspruch 1, das ferner eine Düse umfasst, die an einem ersten Ende an dem Sprinklerarm angebracht ist.

4. Eingebettetes Sprinklersystem nach Anspruch 3, das ferner eine Dreheinheit umfasst, die an einem zweiten, dem ersten Ende gegenüberliegenden Ende an dem Sprinklerarm angebracht ist.

5. Eingebettetes Sprinklersystem nach Anspruch 1, das ferner einen Schieber umfasst, der unterhalb einer Dreheinheit angebracht ist.

6. Verfahren zum Zusammenbau des eingebetteten Sprinklersystems (300) nach Anspruch 1, wobei das Verfahren umfasst:
Anbringen des Generatorrotors (302) direkt an dem Sprinklerarm;
Umschließen des Generatorrotors mit dem Generatorstator (304); und
Ermöglichen eines Fluidstroms von einer Düse zur Atmosphäre mittels des Sprinklerarms.

7. Verfahren nach Anspruch 6, das ferner ein Erfassen der Drehbewegung des Sprinklerarms während des Fluidstroms mittels des Generatorrotors (302) umfasst.

8. Verfahren nach Anspruch 7, das ferner eine Erzeugung von Strom aus der erfassten Drehbewegung umfasst.

9. Verfahren nach Anspruch 6, das ferner ein drahtloses Steuern und Überwachen des Generatorrotors (302) umfasst.

## Revendications

1. Système de pulvérisateur incorporé (300) comprenant :
un bras de pulvérisateur ;
un rotor de générateur (302) directement monté et intégré sur le bras de pulvérisateur ;
un stator de générateur (302) enfermé autour du rotor de générateur ; et
un boîtier de carte de circuit imprimé (306) enfermant le stator de générateur, **caractérisé en ce que** le rotor de générateur est configuré pour capturer un mouvement de rotation du bras de pulvérisateur et convertir le mouvement en énergie pour la génération d'énergie.

2. Système de pulvérisateur incorporé selon la revendication 1, dans lequel le rotor de générateur (302) est monté, de manière détachable, sur le bras de pulvérisateur.

3. Système de pulvérisateur incorporé selon la revendication 1, comprenant en outre une buse montée sur le bras de pulvérisateur au niveau d'une première extrémité.

4. Système de pulvérisateur incorporé selon la revendication 3, comprenant en outre une unité rotative montée sur le bras de pulvérisateur au niveau d'une seconde extrémité opposée à la première extrémité.

5. Système de pulvérisateur incorporé selon la revendication 1, comprenant en outre un robinet - vanne monté au-dessous d'une unité rotative.

6. Procédé pour assembler le système de pulvérisation incorporé (300) selon la revendication 1, le procédé comprenant les étapes consistant à :
monter le rotor de générateur (302) directement sur le bras de pulvérisateur ;
enfermer le rotor de générateur avec le stator de générateur (304) ; et
permettre un écoulement de fluide d'une buse à l'atmosphère via le bras de pulvérisateur.

7. Procédé selon la revendication 6, comprenant en outre l'étape consistant à capturer le mouvement de rotation du bras de pulvérisateur pendant l'écoulement de fluide via le rotor de générateur (302).

8. Procédé selon la revendication 7, comprenant en outre la génération de puissance à partir du mouvement de rotation capturé.

9. Procédé selon la revendication 6, comprenant en outre les étapes consistant à commander sans fil et à surveiller le rotor de générateur (302).
